Europäisches Patentamt

European Patent Office

Office européen des brevets

(19)

(11) Publication number: **0 041 284**
**B1**

(12) **EUROPEAN PATENT SPECIFICATION**

(45) Date of publication of patent specification: **05.10.83**

(21) Application number: **81200492.7**

(22) Date of filing: **08.05.81**

(51) Int. Cl.³: **C 10 G 49/02,**
**C 10 G 49/04,**
**C 10 G 45/00,**
**C 10 G 45/04, C 10 G 45/08**

(54) A process for the demetallization of hydrocarbon oils.

(30) Priority: **29.05.80 NL 8003092**

(43) Date of publication of application:
**09.12.81 Bulletin 81/49**

(45) Publication of the grant of the patent:
**05.10.83 Bulletin 83/40**

(84) Designated Contracting States:
**BE CH DE FR GB IT LI NL SE**

(56) References cited:
**GB - A - 1 560 590**
**GB - A - 1 560 599**
**GB - A - 2 038 354**
**US - A - 4 069 140**
**US - A - 4 089 774**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **van der Eijk, Huno**
**Badhuisweg 3**
**NL-1031 CM Amsterdam (NL)**
Inventor: **Dirkx, Jacobus Mathias Hendrikus**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

Courier Press, Leamington Spa, England.

A process for the demetallization of hydrocarbon oils

The invention relates to a process for the demetallization of hydrocarbons oils.

Heavy hydrocarbon oils often contain substantial quantities of metal compounds, in particular vanadium and nickel compounds. If these oils are used as feed for catalytic processes, such as cracking and hydrocracking, said metals deposit on the catalyst particles. As a result of the increasing vanadium and nickel concentrations on the active catalyst sites, deactivation of the catalyst and undesirable side reactions occur. In order to avoid these drawbacks it has already been proposed to remove the metals from the feed before contacting it with the metal-sensitive catalyst. This can be effected by contacting the feed with a suitable demetallization catalyst at elevated temperature and pressure and in the presence of hydrogen. For this purpose several catalysts have already been proposed consisting of a porous material that may contain one or more metals with hydrogenation activity.

The Applicant has made an investigation into the demetallization of hydrocarbon oils of which more than 70% by volume boils above 360°C which have a $C_5$ asphaltene content of less than 2.5% by weight and of which the total vanadium and nickel content is 5—150 ppmw. For the sake of brevity hydrocarbon oils fulfilling said three requirements will be hereinafter designated "high-boiling hydrocarbon oils".

The investigation revealed that good catalysts for the demetallization of high-boiling hydrocarbon oils must comply with certain requirements in relation to the metal with hydrogenation activity they contain as well as their porosity and particle size. The requirement to be placed on the porosity and particle size are, moreover, dependent on the hydrogen partial pressure at which the demetallization is carried out. A catalyst for the demetallization of high-boiling hydrocarbon oils is qualified in the present patent application as good, if the catalyst a) still has a high activity for the removal of vanadium and nickel at the moment half the catalyst life has elapsed, b) has a high storage capacity for vanadium and nickel, and c) exhibits a low hydrogen comsumption.

It was found that good catalysts for the demetallization of high-boiling hydrocarbon oils should contain molybdenum as the sole metal with hydrogenation activity in a quantity of more than 2 parts by weight per 100 parts by weight of porous carrier and should have such a porosity and particle size that the following relation is met:

$$7.0.10^{-3}.(P_{H_2})^2 > p/d^{0.6} > 1.4.10^{-3}.(P_{H_2})^2,$$

where
p=the average pore diameter in nm,
d=the average particle diameter in mm, and
$P_{H_2}$=the hydrogen partial pressure used in bar.

The above-mentioned values of d and p are defined as follows on the basis of their determination method.

The manner in which d is determined depends on the shape of the catalyst particles. If said shape is such that the particle diameter distribution of the catalyst can be determined by means of sieve analysis, d is determined as follows. After a complete sieve analysis of a representative catalyst sample using the set of standard sieves described in the 1969 Book of ASTM Standards, Part 30, pp 96—101 (ASTM Designation, E 11—61), has been carried out, d is read from a graph in which for each successive sieve fraction the weight percentage, based on the total weight of the catalyst sample, has been cumulatively plotted as a function of the linear average particle diameter of the relevant sieve fraction; d is the particle diameter corresponding with 50% of the total weight. Said method can be used for determining d of spherical and granular materials and of materials of similar shape, such as extrudates and pellets with a length/diameter ratio between 0.9 and 1.1. The determination of d of extrudates and pellets with a length/diameter ratio below 0.9 or above 1.1 and of similar cylindrical materials of which the particle diameter distribution cannot be determined by means of sieve analysis, is carried out as follows. After a complete length distribution analysis (in the event of the length/diameter ratio being below 0.9) or after a complete diameter distribution analysis (in the event of the length/diameter ratio being above 1.1) of a representative catalyst sample is carried out, d is read from a graph in which for each successive length or diameter fraction the weight percentage, based on the total weight of the catalyst sample, is cumulatively plotted as a function of the linear average size of the relevant fraction; d is the value corresponding to 50% of the total weight.

After the complete pore diameter distribution of a catalyst sample is determined, p is read from a graph in which for each successive pore volume increase that is smaller than or equal to 10% of the total pore volume, the quotient of the pore volume increase and the corresponding pore diameter interval is cumulatively plotted as a function of the linear average pore diameter over the relevant pore diameter interval; p is the pore diameter corresponding to 50% of the total quotient.

The complete pore diameter distribution of the catalyst can be determined by means of the nitrogen adsorption/desorption method (as described by E. V. Ballou and O. K. Doolen in Analytic Chemistry *32*, 532 (1960)) in combination with the mercury penetration method (as described by H. L. Ritter and L. C. Drake in Industrial and Engineering Chemistry, Analytical Edition *17*, 787 (1945)), using mercury pressures of 1—2000 bar. The pore diameter distribution of the catalyst in the pore diameter range of 7.5 nm and below is calculated with reference to the nitrogen desorption isotherm (assuming cylindrical pores) by the method described by J. C. P. Broekhoff and J. H. de Boer in Journal of Catalysis 10, 377 (1968) and the pore diameter distribution of the catalyst in the pore diameter range above 7.5 nm is calculated by means of the formula:

$$\text{pore diameter (in nm)} = \frac{15{,}000}{\text{absolute mercury pressure (in bar)}}$$

The total pore volume of the catalyst is the sum of the nitrogen pore volume present in pores with a diameter of 7.5 nm and below (determined by means of the above-mentioned nitrogen adsorption/desorption method) and the mercury pore volume present in pores with a diameter above 7.5 nm (determined by means of the above-mentioned mercury penetration method).

The present patent application therefore relates to a process for demetallizing hydrocarbon oils, in which high-boiling hydrocarbon oils are contacted at elevated temperature and pressure and in the presence of hydrogen with a catalyst containing molybdenum as the sole metal with hydrogenation activity in a quantity of more than 2 parts by weight per 100 parts by weight of porous carrier and which catalyst has such p and d-values that the above-mentioned relation between p, d and $P_{H_2}$ is fulfilled.

The catalysts which can be used according to the invention are characterized by a certain relation between their average pore diameter and average particle diameter at a certain hydrogen partial pressure. In the process according to the invention it is of essential importance that the average pore diameter and average particle diameter used for the characterization of the catalysts are determined by the above-mentioned methods for p and d. If for characterizing the catalysts use is made of an average pore diameter or an average particle diameter determined by another method (for example an average pore diameter calculated as $4\times$ the quotient of the pore volume and the surface area, or an average particle diameter calculated as the linear average), results can be obtained which are not in accordance with the invention.

The relation found between p and d and $P_{H_2}$ can serve three different purposes. In the first place the relation offers the possibility of determining the range within which $P_{H_2}$ should be chosen to obtain good results with a catalyst having a certain p and d. Further, the relation can be used to determine the range within which d of a catalyst material with a certain p has to be chosen to obtain good results at a certain $P_{H_2}$. Finally, the relation enables the determination of the range within which p of a catalyst with a certain d should be chosen to obtain good results at a certain $P_{H_2}$.

Demetallization according to the invention is applied to high-boiling hydrocarbon oils. Examples of such oils are distillates obtained in the distillation of crude oils at reduced pressure, deasphalted distillation residues of crude oils and mixtures thereof. Said distillation residues can be obtained either during distillation at atmospheric pressure (long residues) or during distillation at reduced pressure (short residues). Although it is in principle possible in the process according to the invention to start from a feed completely consisting of one or more distillates obtained in the distillation of crude oils at reduced pressure, or of one or more deasphalted oils, for example deasphalted long or short residues, the feed chosen is preferably a mixture of a distillate obtained in the distillation at reduced pressure of a long residue and a deasphalted short residue. A very suitable feed for the process according to the invention can be prepared by separating a long residue into a distillate and a short residue by distillation at reduced pressure, deasphalting the short residue and mixing the distillate with the deasphalted oil, preferably in production ratio. If in the process according to the invention use is made of a distillate obtained in the distillation at reduced pressure of a long residue, as feed or as feed component, a flashed distillate is preferably chosen for this purpose. As stated above, it is possible in the process according to the invention to use a deasphalted oil as feed or as feed component. The oil is preferably deasphalted at elevated temperature and pressure and in the presence of a lower hydrocarbon such as propane, butane or pentane or a mixture thereof as solvent.

The catalysts that are suitable for use in the process according to the invention contain molybdenum on a porous carrier. Suitable porous carriers are oxides of the elements of Groups II, III and IV of the Periodic System, such as silica, alumina, magnesia, zirconia and boria or mixtures of said oxides such as silica-alumina, silica-magnesia and alumina-magnesia.

Silica is preferred as porous carrier for the molybdenum. Very suitable carriers are silica particles prepared by spray-drying of a silica gel followed by extrusion of the spray-dried microparticles to form larger particles, and spherical silica particles obtained by means of the known oil drop method. In the latter method a silica hydrosol is formed, the hydrosol is combined with a gelation agent and the mixture dispersed as drops in an oil that is kept at elevated temperature; the drops remain in the oil until they have solidified to spherical hydrogel particles which are subsequently separated off, washed, dried and calcined. The present catalysts or catalyst carriers can inter alia be formed by extrusion or tabletting. In addition to these shaping techniques, especially the known nodulizing technique is a very attractive shaping method for the present catalyst or catalyst carriers. By this method catalyst particles having a diameter of at most 0.1 mm are agglomerated to particles with a diameter of at least 1 mm by means of a granulation liquid.

The catalysts that are used in the process according to the invention should contain molybdenum as the sole metal with hydrogenation activity in a quantity of more than 2.0 parts by weight per 100 parts by weight of carrier material. The quantity of molybdenum is as a rule less than 12.5 parts by weight per 100 parts by weight of carrier material. Preferred are catalysts containing 2.5—10 and in particular 2.5—7.5 parts by weight of molybdenum per 100 parts by weight of porous carrier. The molybdenum may be present on the carrier in metallic form, as molybdenum oxide or preferably as sulphide. The preparation of the present catalysts is preferably carried out by impregnating a porous carrier with an aqueous solution containing one or more molybdenum compounds, followed by drying and calcining the composition. Special preference is given to preparation by the "dry" impregnation technique, in which the porous carrier is contacted with a quantity of impregnation liquid, the volume of which mainly corresponds with the pore volume of the carrier, followed by drying and calcining the composition.

The process according to the invention is preferably carried out by passing the hydrocarbon oil to be demetallized at elevated temperature and pressure and in the presence of hydrogen, in upward, downward or radial direction through one or more vertically arranged reactors containing a fixed or moving bed of the relevant catalyst particles. If desired, the process can also be carried out by suspending the catalyst in the hydrocarbon oil to be treated. The process according to the invention is very suitably carried out at a temperature of 300—450°C, a hydrogen partial pressure of 25—200 bar and a space velocity of 0.1—10 kg.kg$^{-1}$.h$^{-1}$. Special preference is given to a temperature of 325—425°C, a hydrogen partial pressure of 35—175 bar and a space velocity of 0.5—7.5 kg.kg$^{-1}$.h$^{-1}$.

As already stated in the foregoing, the process according to the invention is also suitable for distillates obtained in the distillation at reduced pressure of crude oils as well as deasphalted oils obtained after the deasphalting of distillation residues originating from the distillation of crude oils at atmospheric or reduced pressure. The process according to the invention is also suitable for distillates obtained in the distillation at reduced pressure of products prepared by thermal or catalytic cracking as well as for deasphalted oils obtained after the deasphalting of distillation residues originating from the distillation of products prepared by thermal or catalytic cracking of heavy hydrocarbon oils.

Demetallization of high-boiling hydrocarbon oils is especially of importance if the intention is to subject said oils subsequently to a catalytic conversion process for preparing light hydrocarbon oils, such as gasolines and kerosines. Owing to the previous demetallization of the feed deactivation of the conversion catalyst and undesirable side reactions occur to a far lesser extent during the conversion process. The process according to the invention can therefore very suitably be used as pretreatment of a high-boiling hydrocarbon oil which is subsequently converted into light hydrocarbon oils through a catalytic conversion process such as cracking or hydrocracking. If the conversion process is carried out over a fixed bed catalyst and the high-boiling hydrocarbon oil has a relatively low metal content, the above-mentioned pretreatment can very suitably be carried out in the conversion reactor by replacing a small portion of the conversion catalyst by demetallization catalyst at the beginning of the catalyst bed.

The invention will now be illustrated with reference to the following Example.

Example

13 catalysts (1—13) were used for the hydrodemetallization of three hydrocarbon oils (A—C). The demetallization was carried out by passing the oils togther with hydrogen in downward direction through a vertically arranged cylindrical reactor containing a fixed bed of the relevant catalyst at 375°C, a $P_{H_2}$ of 60 or 150 bar, a space velocity of 2 kg.kg$^{-1}$.h$^{-1}$ and a hydrogen/oil ratio of 1000 Nl.kg$^{-1}$. Some properties of the catalysts, which were used in sulphidic form with the exception of catalyst 12, as well as some properties of the hydrocarbon oils used as feeds are stated below.

## TABLE A

| Catalyst no. | Metal load in parts by wt per 100 parts by wt of carrier | Carrier | p, nm | d, mm | $p/d^{0.5}$ |
|---|---|---|---|---|---|
| 1 | 4 Mo | $SiO_2$ | 11 | 1.5 | 9.0 |
| 2 | 4 Mo | $SiO_2$ | 60 | 1.5 | 49.0 |
| 3 | 6 Mo | $SiO_2$ | 10 | 1.5 | 8.2 |
| 4 | 4 Mo | $SiO_2$ | 10 | 3.0 | 5.8 |
| 5 | 1.5 Mo | $SiO_2$ | 12 | 1.5 | 9.8 |
| 6 | 0.5 Ni/2V | $SiO_2$ | 10 | 1.5 | 8.2 |
| 7 | 1.5 Ni/6V | $SiO_2$ | 9 | 1.5 | 7.3 |
| 8 | 1 Ni/4Mo | $SiO_2$ | 10 | 1.5 | 8.2 |
| 9 | 3 Ni/8Mo | $Al_2O_3$ | 13 | 1.5 | 10.6 |
| 10 | 4 Cr | $SiO_2$ | 11 | 1.5 | 9.0 |
| 11 | 4 W | $SiO_2$ | 11 | 1.5 | 9.0 |
| 12 | — | $SiO_2$ | 11 | 1.5 | 9.0 |
| 13 | 0.5 Ni/2V | $SiO_2$ | 60 | 1.5 | 49.0 |

Oil A=deasphalted oil. Oil A was obtained by flashing an atmospheric distillation residue of a crude oil from South America and deasphalting the residue obtained with butane.

Oil B=mixture of a flashed distillate and a deasphalted oil. Oil B was obtained starting from an atmospheric distillation residue of a crude oil from South America, by consecutively flashing the atmospheric residue, deasphalting the resultant residue with butane and mixing the flashed distillate with the deasphalted oil in production ratio.

Oil C=atmospheric distillation residue of a crude oil from South America.

## TABLE B

| Oil no. | % by vol. boiling above 360°C | $C_5$ asphaltene content, % by wt. | V+Ni content, ppmw |
|---|---|---|---|
| A | 96 | 0.09 | 74 |
| B | 99 | 0.1 | 85 |
| C | 93 | 7.2 | 225 |

The results of the demetallization experiments are stated in Table C.

## TABLE C

| Exp. no. | Cat. no. | $P_{H_2}$, bar | Oil no. | $M_{max.}$, % by wt. | $k_V$, kg. $kg^{-1}.1.h^{-1}$ | $k_{Ni}$, kg. $kg^{-1}.h^{-1}$ | $H_2$ consumption, % |
|---|---|---|---|---|---|---|---|
| 1 | 1 | 60 | A | 45 | 3.4 | 2.0 | 0.1 |
| 2 | 2 | 60 | A | 60 | 1.3 | 0.7 | 0.1 |
| 3 | 3 | 60 | A | 45 | 3.6 | 2.1 | 0.15 |
| 4 | 4 | 60 | A | 32 | 3.1 | 1.8 | 0.1 |
| 5 | 5 | 60 | A | 47 | 1.6 | 1.0 | 0.1 |
| 6 | 6 | 60 | A | 49 | 1.9 | 0.7 | 0.1 |
| 7 | 7 | 60 | A | 48 | 2.6 | 1.0 | 0.15 |
| 8 | 8 | 60 | A | 45 | 2.4 | 1.8 | 0.25 |
| 9 | 9 | 60 | A | 20 | 3.5 | 2.1 | 0.4 |
| 10 | 10 | 60 | A | 50 | 1.9 | 0.3 | 0.1 |
| 11 | 11 | 60 | A | 50 | 2.9 | 1.4 | 0.1 |
| 12 | 12 | 60 | A | *' | <0.1 | <0.1 | <0.1 |
| 13 | 1 | 150 | A | 25 | 8.0 | 4.7 | 0.2 |
| 14 | 2 | 150 | A | 50 | 3.2 | 1.7 | 0.15 |
| 15 | 13 | 150 | A | 55 | 1.8 | 0.6 | 0.1 |
| 16 | 1 | 60 | B | 40 | 4.0 | 2.4 | 0.15 |
| 17 | 1 | 150 | B | 20 | 10.2 | 6.0 | 0.25 |
| 18 | 2 | 60 | B | 55 | 1.9 | 1.0 | 0.1 |
| 19 | 2 | 150 | B | 45 | 4.8 | 2.5 | 0.2 |
| 20 | 1 | 60 | C | 10 | 0.4 | 0.15 | 0.15 |

*'As a result of the low activity of catalyst 12 $M_{max}$ could not be determined in this case.

The behaviour of the catalysts is evaluated on the basis of $M_{max}$, $k_V$, $k_{Ni}$ and the $H_2$ consumption.

$M_{max}$=the maximum quantity of metal (vanadium and nickel), expressed in % by weight of fresh catalyst, that the catalyst particles can absorb into their pores.

$k_V$=the activity of the catalyst, expressed in $kg.kg^{-1}.h^{-1}$, after half the catalyst life (in terms of quantites of metal absorbed) has elapsed. $k_V$ is calculated by means of the formula:

$$k_V = 2.1 \; n \frac{\text{ppmw V in the feed}}{\text{ppmw V in the product}}$$

$k_{Ni}$=the activity of the catalyst, expressed in $kg.kg^{-1}.h^{-1}$, after half the catalyst life (in terms of quantity of metal absorbed) has elapsed. $k_{Ni}$ is calculated by means of the formula:

$$k_{Ni} = 2.1 \; n \frac{\text{ppmw Ni in the feed}}{\text{ppmw Ni in the product}}$$

$$\text{H}_2 \text{ consumption} = \frac{\text{parts by wt. of H}_2 \text{ used}}{\text{parts by wt. of feed processed}} \times 100\%$$

The behaviour of a catalyst is evaluated good if in the demetallization of oil A under the above reaction conditions the following criteria are met:

$$M_{max} > 30\% \text{ by wt.}$$

$$k_V > 3.0 \; kg.kg^{-1}.h^{-1}$$

$$k_{Ni} > 1.5 kg.kg^{-1}.h^{-1}$$

$$\text{H}_2 \text{ consumption} < 0.2\%$$

Of the experiments 1—20 stated in Table C only the experiments 1, 3, 4, 14, 16 and 19 are experiments according to the invention. In these experiments, for the demetallization of a high-boiling hydrocarbon oil use was made of catalysts that contained as metal with hydrogenation activity exclusively molybdenum in a quantity of more than 2.0 parts by weight per 100 parts by weight of porous carrier and in view of their quotient $p/d^{0.5}$ had been used at a $P_{H_2}$ within the range dictated by the relation. In the experiments 1, 3, 4 and 14 carried out with oil A the above-mentioned criteria regarding $M_{max}$, $k_V$, $k_{Ni}$ and $H_2$ consumption for a good demetallization catalyst were amply fulfilled. A very satisfactory catalyst behaviour was also observed in the experiments 16 and 19.

The experiments 2, 5—13, 15, 17, 18 and 20 fall outside the scope of the invention. They have been included in the patent application for comparison. In the experiments 2, 5—13 and 15 carried out with oil A at least one of the above-mentioned criteria regarding $M_{max}$, $k_V$, $k_{Ni}$ and $H_2$ consumption for a good demetallization catalyst was not met.

In experiment 2 the $P_{H_2}$ used was too low which resulted in too low a value for $k_V$ and $k_{Ni}$.
In experiment 13 a too high $P_{H_2}$ was used which resulted in too low an $M_{max}$.

In experiment 5 a catalyst with too low a molybdenum content was used; in the experiments 6, 7, 10, 11 and 15 catalysts were used that contained as metal components Ni/V, Ni/V, Cr, W and Ni/V respectively instead of Mo; in experiment 12 a catalyst containing no metal component was used. In all these experiments the above-mentioned criteria regarding $k_V$ and $k_{Ni}$ for a good demetallization catalyst were not met.

In the experiments 8 and 9 catalysts containing Ni in addition to Mo were used; in these experiments the above-mentioned criterion regarding $H_2$ consumption was not met and moreover not that regarding $k_V$ and $M_{max}$ respectively for a good demetallization catalyst.

Although in the experiments 5—12 and 15 a $P_{H_2}$ was used that, in view of the quotient $p/d^{0.5}$ of the catalyst, met the relation:

$$7.0.10^{-3}.(P_{H_2})^2 > p/d^{0.5} > 1.4.10^{-3}.(P_{H_2})^2$$

unsatisfactory results were nevertheless obtained. This was caused by the fact that in said experiments catalysts were used which did not comply with the requirement that they must contain molybdenum as the sole metal with hydrogenation activity in a quantity of more than 2.0 parts by weight per 100 parts by weight of porous carrier.

In experiment 17 for the demetallization of high-boiling hydrocarbon oil B a too high $P_{H_2}$ was used which resulted in an unacceptably low $M_{max}$.

Although in experiment 20 use was made of a catalyst that contained molybdenum as the sole metal with hydrogenation activity in a quantity of more than 2.0 parts by weight per 100 parts by weight of porous carrier and that, in view of the quotient $p/d^{0.5}$, was used at a $P_{H_2}$ within the range dictated by the relation, an unsatisfactory result was nevertheless obtained (unacceptably low $M_{max}$, $k_V$ and $k_{Ni}$). This was caused by the fact that in experiment 20 oil C was used as feed, which oil does not belong to the group of high-boiling hydrocarbon oils that is the subject of the present invention.

## Claims

1. A process for the demetallization of hydrocarbon oils, characterized in that hydrocarbon oils of which more than 70% by volume boils above 360°C which have a $C_5$ asphaltene content of less than 2.5% by weight and of which the total vanadium and nickel content is 5—150 parts per million by weight are contacted at elevated temperature and pressure and in the presence of hydrogen with a catalyst containing molybdenum as the sole metal with hydrogenation activity in a quantity of more than 2.0 parts by weight per 100 parts by weight of porous carrier, which catalyst has such an average pore diameter (p) and average particle diameter (d) that the relation:

$$7.0.10^{-3}.(P_{H_2})^2 > p/d^{0.5} > 1.4.10^{-3}.(P_{H_2})^2,$$

where $P_{H_2}$ represents the hydrogen partial pressure used (p in nm, d in mm, $P_{H_2}$ in bar), is fulfilled.

2. A process as claimed in claim 1, characterized in that the hydrocarbon oils consist of distillates obtained in the distillation at reduced pressure of crude oil, deasphalted distillation residues of crude oils or mixtures thereof.

3. A process as claimed in claim 2, characterized in that the hydrocarbon oils consist at least partly of a flashed distillate of a long residue.

4. A process as claimed in any one of claims 1—3, characterized in that the catalyst contains 2.5—10 parts by weight of molybdenum per 100 parts by weight of porous carrier.

5. A process as claimed in claim 4, characterized in that the catalyst contains 2.5—7.5 parts by weight of molybdenum per 100 parts by weight of porous carrier.

6. A process as claimed in any one of claims 1—5, characterized in that the catalyst contains silica as porous carrier.

7. A process as claimed in any one of claims 1—6, characterized in that the molybdenum is present as sulphide in the catalyst.

8. A process as claimed in any one of claims 1—7, characterized in that it is carried out at a temperature of 325—425°C, a hydrogen partial pressure of 35—175 bar and a space velocity of 0.5—7.5 kg.kg$^{-1}$.h$^{-1}$.

9. A process for the catalytic conversion of a heavy hydrocarbon oil into light hydrocarbon oils by cracking or hydrocracking, characterized in that a metal-containing heavy hydrocarbon oil is first demetallized using a process as claimed in any one of claims 1—8 and that the demetallized product is subsequently cracked.

## Patentansprüche

1. Ein Verfahren zur Entmetallisierung von Kohlenwasserstoffölen, dadurch gekennzeichnet, daß Kohlenwasserstofföle, von denen mehr als 70 Volumenprozent oberhalb 360°C sieden, welche einen $C_5$-Asphalten-Gehalt von weniger als 2,5 Gewichtsprozent haben und deren Gesamtgehalt an Vanadium und Nickel 5 bis 150 Gewichtsteile pro Million beträgt, bei erhöhter Temperatur und Druck und in Gegenwart von Wasserstoff mit einem Katalysator kontaktiert werden, der Molybdän als das enzige Metall mit Hydrieraktivität in einer Menge von mehr als 2 Gewichtsteilen pro 100 Gewichtsteile porösem Träger enthält, welcher Katalysator einen durchschnittlichen Porendurchmesser (p) und durchschnittlichen Teilchendurchmesser (d) derart hat, daß die Beziehung

$$7.0.10^{-3}.(P_{H_2})^2 > p/d^{0.5} > 1.4.10^{-3}.(P_{H_2})^2,$$

in der $P_{H_2}$ den angewendeten Wasserstoffpartialdruck darstellt (p in nm, d in mm, $P_{H_2}$ in Bar), erfüllt ist.

2. Ein Verfahren wie in Anspruch 1 beansprucht, dadurch gekennzeichnet, daß die Kohlenwasserstofföle aus Destillaten, die bei der Destillation von Rohöl bei vermindertem Druck erhalten worden sind, aus entasphaltierten Destillationsrückständen von Rohölen oder Gemischen davon bestehen.

3. Ein Verfahren wie in Anspruch 2 beansprucht, dadurch gekennzeichnet, daß die Kohlenwasserstofföle zumindest teilweise aus einem durch Entspannungsdestillation eines langen Rückstandes erhaltenen Destillat (flashed distillate) bestehen.

4. Ein Verfahren wie in irgendeinem der Ansprüche 1 bis 3 beansprucht, dadurch gekennzeichnet, daß der Katalysator 2,5-bis 10 Gewichtsteile Molybdän pro 100 Gewichtsteile porösem Trägermaterial enthält.

7

5. Ein Verfahren wie in Anspruch 4 beansprucht, dadurch gekennzeichnet, daß der Katalysator 2,5 bis 7,5 Gewichtsteile Molybdän pro 100 Gewichtsteile porösem Trägermaterial enthält.

6. Ein Verfahren wie in irgendeinem der Ansprüche 1 bis 5 beansprucht, dadurch gekennzeichnet, daß der Katalysator Siliciumdioxid als poröses Trägermaterial enthält.

7. Ein Verfahren wie in irgendeinem der Ansprüche 1 bis 6 beansprucht, dadurch gekennzeichnet, daß das Molybdän als Sulfid im Katalysator vorliegt.

8. Ein Verfahren wie in irgendeinem der Ansprüche 1 bis 7 beansprucht, dadurch gekennzeichnet, daß es bei einer Temperatur von 325 bis 425°C, einem Wasserstoffpartialdruck von 35 bis 175 bar und einer Raumgeschwindigkeit von 0,5—7,5 kg.kg$^{-1}$.h$^{-1}$ durchgeführt wird.

9. Ein Verfahren zur katalytischen Umwandlung eines schweren Kohlenwasserstofföls in leichte Kohlenwasserstofföle durch Cracken oder Hydrocracken, dadurch gekennzeichnet, daß ein metallhaltiges schweres Kohlenwasserstofföl zuerst unter Anwendung eines Verfahrens, wie in irgendeinem der Ansprüche 1 bis 8 beansprucht, entmetallisiert wird und daß das entmetallisierte Produkt anschließend gecrackt wird.

**Revendications**

1. Un procédé pour la démétallisation d'huiles d'hydrocarbures, caractérisé en ce que des huiles d'hydrocarbures dont une proportion de plus de 70% en volume bout au-dessus de 360°C, qui ont une teneur en asphaltènes de moins de 2,5% en poids et dont la teneur totale en vanadium et en nickel est de 5—150 parties par million en poids, sont mises en contact à température et pression élevées et en présence d'hydrogène avec un catalyseur contenant du molybdène comme seul métal ayant une activité d'hydrogénation, à raison de plus de 2,0 parties en poids pour 100 parties en poids de support poreux, ce catalyseur ayant un diamètre moyen de pores (p) et un diamètre moyen de particules (d) tels que la relation suivante soit satisfaite:

$$7,0.10^{-3}.(P_{H_2})^2 > p/d^{0,5} > 1,4.10^{-3}.(P_{H_2})^2,$$

où $P_{H_2}$ représente la pression partielle d'hydrogène utilisée (p en nm, d en mm, $P_{H_2}$ en bars).

2. Un procédé selon la revendication 1, caractérisé en ce que les huiles d'hydrocarbures sont constituées de distillats obtenus dans la distillation sous pression réduite de pétrole brut, de résidus de distillation désasphaltés de pétroles bruts ou de leurs mélanges.

3. Un procédé selon la revendication 2, caractérisé en ce que les huiles d'hydrocarbures sont constituées au moins d'un distillat de vaporisation-élcaire d'un résidu long.

4. Un procédé selon l'une quelconque des revendications 1 à 3, caractérisé en ce que le catalyseur contient 2,5—10 parties en poids de molybdène pour 100 parties en poids de support poreux.

5. Un procédé selon la revendication 4, caractérisé en ce que le catalyseur contient 2,5—7,5 parties en poids de molybdène pour 100 parties en poids de support poreux.

6. Un procédé selon l'une quelconque des revendications 1 à 5, caractérisé en ce que le catalyseur contient de la silice comme support poreux.

7. Un procédé selon l'une quelconque des revendications 1 à 6, caractérisé en ce que le molybdène est présent sous la forme de sulfure dans le catalyseur.

8. Un procédé selon l'une quelconque des revendications 1 à 7, caractérisé en ce qu'il est mis en oeuvre à une température de 325—425°C, une pression partielle d'hydrogène de 35—175 bars et une vitesse spatiale de 0,5—7,5 kg.kg$^{-1}$.h$^{-1}$.

9. Un procédé pour la conversion catalytique d'une huile lourde d'hydrocarbures en huiles légères d'hydrocarbures par craquage ou hydrocraquage, caractérisé en ce qu'une huile lourde d'hydrocarbures contenant des métaux est d'abord démétallisée par utilisation d'un procédé selon l'une quelconque des revendications 1 à 8, et que le produit démetallisé est ensuite craqué.